# DEMANDE DE BREVET EUROPEEN

(11) **EP 0 936 775 A1**
(43) Date de publication de la demande: **18.08.1999**
(21) Numéro de dépôt: 99400327.5
(22) Date de dépôt: 11.02.1999
(51) Int. Cl.: H04L 9/08, H04N 1/44

(54) **Procédé de transmission sécurisée de messages de données entre deux utilisateurs de deux équipements de transmission respectifs reliés par un réseau de transmission de données**

(30) Priorité: 11.02.1998 FR 9801610
(71) Demandeur: SAGEM SA, 75116 Paris (FR)
(72) Inventeur: Nicaise, Pierre, 60589 Coye la Foret (FR)
(74) Mandataire: Bloch, Gérard

(57) **Abrégé**

Le procédé de transmission sécurisée de messages de données entre deux utilisateurs (1, 2) de deux équipements de transmission des données respectifs (11, 12) reliés par un réseau de transmission de données (10) consiste à mémoriser et associer les empreintes digitales des deux utilisateurs autorisés respectifs de ceux-ci (1, 2) avec deux clés, de chiffrement et de déchiffrement de messages, et on ne transmet en chiffré et délivre en clair un message d'un utilisateur (1) à un autre (2) qu'après vérification de leurs empreintes associées.

## Description

La transmission de données entre deux utilisateurs d'équipements de transmission respectifs, reliés par un réseau de transmission nécessite souvent de prendre des dispositions pour assurer la protection de ces données. C'est une nécessité par exemple dans le secteur bancaire ou encore dans l'industrie pour certaines données, confidentielles.

Les risques liés à la transmission des données sont à plusieurs niveaux.

Tout d'abord, lors de la transmission d'un équipement à l'autre dans le réseau, un tiers risque de prendre connaissance des données émises, ceci à la suite d'une erreur d'adressage ou de manoeuvres à cet effet. Pour reprendre l'exemple des données bancaires, le tiers peut par exemple tenter de capter un ordre de virement pour le réémettre après avoir modifié l'identité du bénéficiaire.

Une façon de se protéger des écoutes de tiers est de chiffrer les messages, de façon à ce que leur signification demeure inaccessible à tout tiers les recevant.

Ensuite, au niveau des équipements, il existe le risque que l'utilisateur émetteur ne soit pas celui qui est autorisé et il en est de même pour l'utilisateur récepteur.

Une protection classique à ce niveau consiste à associer un lecteur de badge et/ou un clavier de saisie de mot de passe à chaque équipement ou à le pourvoir d'une clé mécanique.

Cela impose cependant une contrainte pour les utilisateurs et, en outre, la sécurité n'est pas absolue puisque rien n'interdit, à un utilisateur parmi plusieurs autorisés à utiliser un équipement, de se faire passer pour un autre.

La présente invention vise à éviter ces inconvénients.

A cet effet, l'invention concerne un procédé de transmission sécurisée de messages de données entre deux utilisateurs de deux équipements de transmission des données respectifs reliés par un réseau de transmission de données, procédé dans lequel :
- dans une phase d'initialisation,
- on saisit et mémorise, pour chaque équipement, des données d'identification physique représentant une caractéristique physique d'un utilisateur autorisé de celui-ci, données que l'on associe à l'équipement considéré, et on associe en une paire les données des deux caractéristiques relevées,
- on associe une clé de chiffrement et une clé correspondante de déchiffrement de messages à la paire de données d'identification, et, dans une phase d'exploitation,
pour la transmission d'un message depuis l'un des équipements, sous la commande d'un utilisateur présent,
en émission :
- on saisit la caractéristique physique de celui-ci et on la compare aux données homologues de l'utilisateur autorisé pour, en cas de concordance, chiffrer le message selon la clé associée et l'émettre et en réception,
- on mémorise le message chiffré et on saisit une caractéristique physique d'un utilisateur récepteur présent,
procédé caractérisé par le fait que, en émission, on émet, associées au message, les données d'identification physique de l'utilisateur émetteur, présent et autorisé, et, en réception, on mémorise lesdites données d'identification physique reçues et
on ne délivre le message, sous forme déchiffrée, qu'après :
- accès aux données d'identification formant, avec celles reçues, ladite paire et accès à la clé de déchiffrement associée,
- déchiffrement du message selon ladite clé, et
- contrôle de la concordance de la caractéristique physique saisie de l'utilisateur récepteur présent avec les données d'identification auxquelles on a accédé.

Ainsi, aux étapes d'émission et de délivrance du message, protégé par chiffrement lors de sa transmission, on vérifie la correspondance, ou biunivocité, entre les deux utilisateurs autorisés.

De ce fait, toute divergence du trajet du message par rapport au trajet aboutissant à son destinataire prévu est soit évitée, par refus de délivrance à un autre utilisateur de l'équipement récepteur, soit sans effet lorsqu'elle intervient au niveau du réseau, grâce au chiffrement.

De même, toute intrusion éventuelle par un tiers sur ce trajet, visant à transmettre un message apocryphe, est sans effet puisque ce tiers ne dispose pas de la clé de chiffrement et des données d'authentification.

L'invention sera mieux comprise à l'aide de la description suivante d'un mode de réalisation préféré du procédé de l'invention, en référence au dessin annexé, sur lequel :
- la figure 1 représente schématiquement une liaison entre deux utilisateurs d'équipements de transmission de données reliés par un réseau de transmission,
- la figure 2 est un schéma par blocs de l'un des terminaux, et
- la figure 3 est un diagramme illustrant le processus de délivrance d'un message.

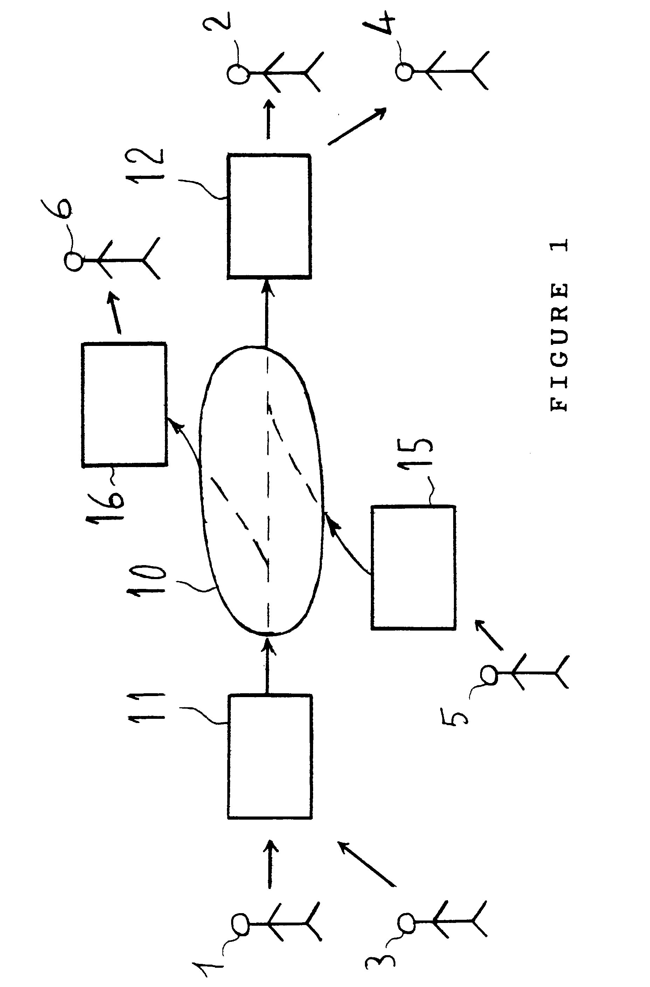

Sur la figure 1 est représentée très schématiquement une liaison de données entre deux opérateurs ou utilisateurs autorisés, 1 et 2, utilisant des équipements respectifs 11 et 12 de transmission de messages de données, ici des terminaux et précisément des télécopieurs, reliés l'un à l'autre par un réseau de transmission de données 10, ici le réseau téléphonique commuté.

Afin d'illustrer les risques encourus pour transmettre un message entre les utilisateurs autorisés 1 et 2, en l'absence du procédé de l'invention, il a été représenté quatre tiers, 3, 4, 5 et 6 susceptibles d'affectuer la sécurité de cette transmission entre les utilisateurs 1 et 2. Un tiers 3 pourrait utiliser le télécopieur 11 pour émettre vers l'utilisateur 2 un message apocryphe. De même, un tiers 4 pourrait prendre connaissance de la télécopie au niveau du télécopieur 12. Au niveau du réseau 10, un tiers 5, disposant d'un télécopieur 15, pourrait aussi émettre vers l'utilisateur 2. De même, un tiers 6 équipé d'un télécopieur 16 risque, volontairement ou non, de recevoir, à la place du télécopieur 12, un message du télécopieur 11.

Afin d'éviter ces risques, selon l'invention,
- dans une phase d'initialisation,
- on saisit et mémorise, pour chaque télécopieur 11, 12, des données d'identification physique représentant une caractéristique physique de l'utilisateur autorisé 1, 2 de celui-ci, données que l'on associe au télécopieur considéré 11, 12, et on associe en une paire les données des deux caractéristiques relevées,
- on associe une clé de chiffrement et une clé correspondante de déchiffrement de messages à la paire de données d'identification, et, dans une phase d'exploitation,
pour la transmission d'un message depuis l'un des télécopieurs (11), sous la commande d'un utilisateur présent 1, 3,
- en émission :
- on saisit la caractéristique physique de celui-ci (1, 3) et on la compare aux données homologues de l'utilisateur autorisé 1 pour, en cas de concordance, chiffrer le message selon la clé associée et l'émettre en y associant les données d'identification physique de l'utilisateur émetteur 1, présent et autorisé, et
en réception,
- on mémorise le message chiffré et lesdites données d'identification physique reçus, et
on ne délivre le message, sous forme déchiffrée, qu'après :
- accès aux données d'identification formant, avec celles reçues, ladite paire et accès à la clé de déchiffrement associée,
- saisie d'une caractéristique physique d'un utilisateur récepteur présent, 2, 4
- contrôle de sa concordance avec les données d'identification (2) auxquelles on a accédé, et
- déchiffrement du message selon ladite clé.

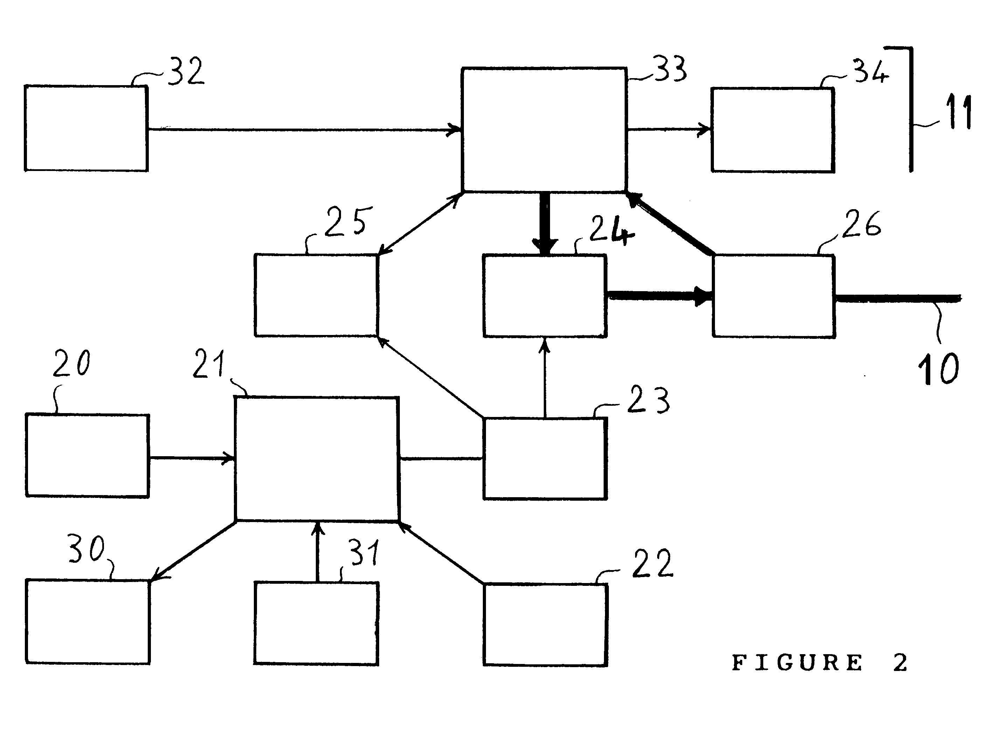

La figure 2 représente schématiquement le télécopieur 11. Il comporte une base de temps 20 associée à une unité centrale 21, ici un microprocesseur, gérant l'ensemble des circuits suivants.

Un lecteur 22 d'une caractéristique physique de l'utilisateur autorisé 1, ici des empreintes digitales, fournit, dans une phase de mise en service, des données correspondantes d'identification, ou authentification, à une mémoire 23, à travers le microprocesseur 21. La mémoire 23 est protégée, dans cette phase, par un mot de code d'accès. Par empreintes, on désigne en fait les reliefs et sillons en extrémité des doigts dont on saisit l'image, pour par exemple la condenser sous la forme de données de position de quelques points caractéristiques de croisement des sillons. L'image de la rétine est une autre caractéristique physique utilisable.

La mémoire 23 comporte aussi une clé de chiffrement de données de message de télécopie. Les données d'identification et la clé de chiffrement concernent l'émission des télécopies et permettent chacune d'identifier l'utilisateur émetteur, ce qui offre donc une redondance pour la vérification de cette identité par le télécopieur récepteur 12. Pour la réception de telles télécopies, la mémoire 23 comporte des données homogues d'identification de l'utilisateur, ou correspondant, 2 et une clé de déchiffrement. Il est supposé que les télécopieurs 11 et 12 utilisent la même clé de chiffrement, si bien que leurs clés de déchiffrement sont identiques, et inverses de leur clé commune de chiffrement.

Un bloc de chiffrement 24 et un bloc de déchiffrement 25 sont reliés à la mémoire 23 pour en recevoir la clé voulue.

Un dispositif d'analyse optique 32, ou scanner, alimente en données de télécopie une mémoire de télécopies 33, elle-même commandant une imprimante 34. Pour les échanges avec le réseau 10, la mémoire 33 est reliée à une interface 26 d'émission/réception à modem, la liaison traversant le bloc de chiffrement 24 pour l'émission et étant directe pour les télécopies reçues du réseau 10. Le bloc de déchiffrement 25 est relié à la mémoire 33 pour déchiffrer, avant impression, les messages reçus et mémorisés.

Un clavier de commande 30 et un écran 31 assurent les relations homme-machine.

L'exploitation des télécopieurs 11 et 12 peut s'effectuer de diverses façons.

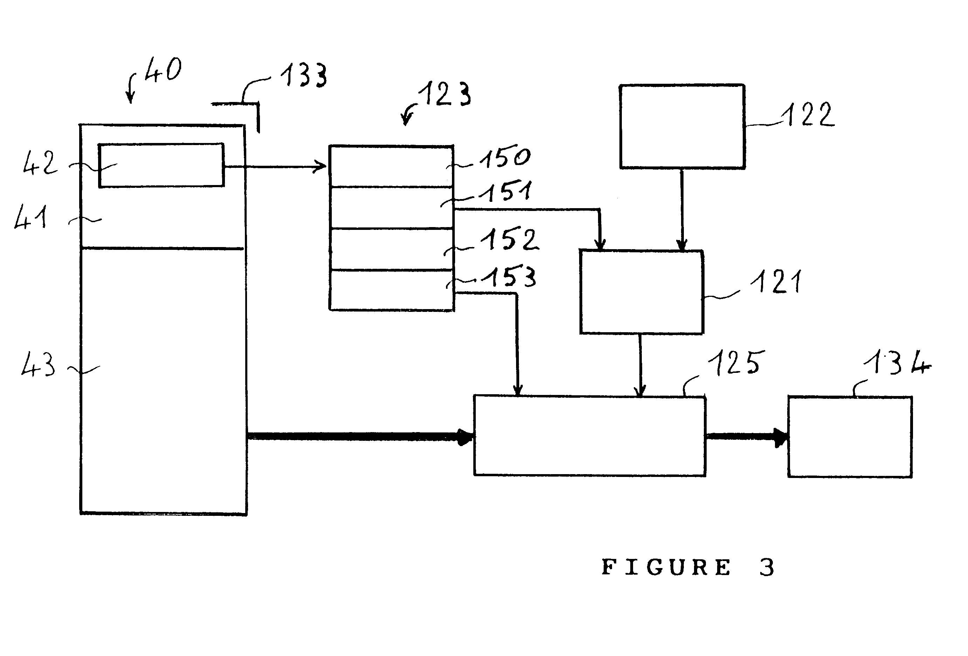

Dans une exploitation que l'on peut qualifier de fermée (destinataire prédéterminé), l'utilisateur 1, ayant en mémoire 33 un message à transmettre à l'utilisateur 2, commande l'émission du message par simple apposition d'un doigt sur le lecteur 22. Le microprocesseur 21 compare alors les données d'identification provenant du lecteur 22 à celles de l'utilisateur 1 autorisé en mémoire 23 et vérifie ainsi que l'utilisateur présent est bien l'utilisateur 1. Comme le montre la figure 3, un en-tête 41 de message de télécopie 40, avec le nom, les numéros d'appel des utilisateurs émetteur 1 et récepteur 2, initialement chargés depuis le clavier 30, et les données 42 d'identification de l'utilisateur émetteur 1, est alors associé aux données de télécopie à émettre et celles-ci sont chiffrées (43) par le bloc 24 avant émission (26) en ligne.

En variante, il peut y avoir un destinataire parmi plusieurs en mémoire dans un annuaire. En pareil cas, le lecteur 22 authentifie simplement l'utilisateur 1. Le destinataire est choisi à partir du clavier 30 par son numéro d'appel ou tout équivalent, comme son nom dans l'annuaire. Si les divers destinataires possibles ont des clés de chiffrement différentes, la clé pertinente est sélectionnée d'après la saisie du destinataire au clavier 30.

Dans les deux exploitations ci-dessus, il peut en outre être prévu une pluralité d'utilisateurs autorisés du télécopieur 11, autorisés à échanger des télécopies avec un ou un ensemble de correspondants (2, 4, 6) qui leurs sont propres. La mémoire 23 contient alors une pluralité correspondante de blocs de données comportant chacun des données d'authentification de l'utilisateur (1, 3) considéré, les identités des correspondants, sous la forme de données représentant ici leurs empreintes digitales, et les clés de chiffrement et de déchiffrement. Il peut en particulier être prévu d'utiliser les données d'authentification comme clé de chiffrement et en particulier comme clé publique de chiffrement, associée logiquement à une clé secrète de déchiffrement.

Dans le télécopieur 12, identique ici au télécopieur 11, les processus d'identification de l'utilisateur autorisé 2 suivent les principes exposés plus haut pour l'émission et une nouvelle description détaillée à ce sujet est donc superflue.

La figure 3 illustre le processus de délivrance d'un message reçu dans le télécopieur 12. Les circuits représentés sont identiques à leurs homologues du télécopieur 11 de la figure 2 et en portent la référence, précédée de la centaine 1.

Afin de prévenir l'utilisateur 2 autorisé de l'arrivée du message, une indication est ici prévue, à la fois sous forme sonore et sous forme d'affichage à l'écran du nom du destinataire 2, nom extrait de l'en-tête 41.

Spécifiquement, le message 40 est reçu et mémorisé en mémoire 133 pour ensuite être déchiffré et délivré, ici édité par impression sur l'imprimante 134, uniquement si l'utilisateur autorisé 2 appose son doigt sur le lecteur d'empreintes 122, ce qui commande la fourniture, au bloc 125, de la clé de déchiffrement de la mémoire 123 la contenant. La mémoire 123 comporte, pour chaque liaison biunivoque 1, 2, un bloc mémoire comportant quatre zones associées 150, 151, 152 et 153, contenant respectivement les données d'identification de l'utilisateur 1, ici, émetteur, celles de l'utilisateur 2, la clé de chiffrement et la clé de déchiffrement. La mémoire 123 est adressée à partir des données 42 du message de télécopie identifiant l'utilisateur émetteur 1, que l'on recherche dans la zone 150, c'est-à-dire que la clé de déchiffrement est associée en mémoire 153 à ces données (150) d'identification de l'utilisateur émetteur 1. D'une façon générale, le nom, ou les données d'identification, de l'utilisateur 1 ou de l'utilisateur 2 peut de même servir à repérer le bloc de données 150 à 153, l'utilisation des deux noms levant toute ambiguité si l'un des utilisateurs appartient à plusieurs blocs tels que ci-dessus pour autant de liaisons biunivoques avec divers correspondants. La mémoire 123 fournit aussi (151), à cette occasion, les données d'identification de l'utilisateur autorisé 2, servant à valider (121) les empreintes digitales, saisies (122), d'un utilisateur récepteur présent, pour vérifier qu'il s'agit bien de l'utilisateur autorisé 2. En cas de non concordance entre la caractéristique physique de l'utilisateur présent (4) de l'équipement récepteur 12 avec les données d'identification, le verrouillage, évoqué ci-dessus, interdisant d'éditer le message déchiffré peut porter sur l'édition ou sur le déchiffrement. C'est-à-dire qu'il porte sur un blocage au niveau de l'imprimante 134, (un déchiffrement éventuel pouvant avoir lieu mais son résultat restant inaccessible), et/ou sur un blocage du déchiffrement (125), la télécopie, si elle est éditée, étant alors illisible, car éditée comme une télécopie ordinaire, sans déchiffrement.

Il est ici prévu, dans le cas ci-dessus de saisie de caractéristiques invalides, d'émettre, en retour vers l'équipement 11, un message de tentative d'intrusion ou fraude.

Comme évoqué ci-dessus, il peut être prévu une exploitation par relevé de boîte aux lettres de réception de messages dans le cadre de réseaux de courrier électronique de tout type.

Ainsi, l'utilisateur 2 peut sélectionner par le lecteur 122, parmi les messages reçus par le télécopieur 12, ceux qui lui sont adressés, le lecteur 122 étant donc un dispositif de contrôle d'accès à cette boîte. Parmi les messages de celle-ci, seuls ne sont délivrés (134) que ceux émis par un ou plusieurs correspondants prévus (1). L'utilisateur 4 peut de même disposer en propre d'une telle boîte.

Le procédé décrit ci-dessus prévoit ainsi, à chacun des deux maillons d'extrémité, 1, 11 et 12, 2, de la chaîne de transmission, deux contrôles d'identification : de la source et du destinataire du message. Ces deux contrôles, amont et aval, asservissent la délivrance du message et assurent donc la détection de tout "trajet" incorrect du message, comme exposé en regard de la figure 1.

Les données d'identification peuvent être transmises en clair, pour faciliter leur interprétation en réception. Cependant pour éviter qu'un tiers ne puisse les saisir pour ensuite faire authentifier des messages qu'il émettrait, il peut être prévu de les chiffrer, ou crypter, par une clé de cryptage, dont l'équipement récepteur 12 possède la clé de décryptage correspondante. Ces clés peuvent être semblables aux clés de chiffrement s'il n'est prévu qu'une seule paire d'utilisateurs 1, 2. Sinon, si le télécopieur récepteur 12 dessert une pluralité d'utilisateurs 2, 4 formant chacun l'un des deux termes d'une pluralité correspondantes de paires d'utilisateurs autorisés (1, 2; 3, 4) mettant en jeu un ou plusieurs (11, 15) autres télécopieurs, on crypte les données d'identification selon une clé de cryptage commune à toutes les paires. Le télécopieur 12 n'a ainsi pas besoin d'effectuer une pluralité de tentatives de déchiffrement. De préférence, on inclut des données variables, telles que l'heure, dans les données d'authentification pour faire évoluer leur forme cryptée et ainsi éviter que la clé ne soit découverte par un tiers non autorisé.

En variante, il peut être prévu une pluralité de clés publiques de cryptage, associées à une clé unique secrète de décryptage du terminal télécopieur récepteur 2. Chaque télécopieur correspondant (11, 15) a ainsi une clé qui lui est spécifique.

## Revendications

1. Procédé de transmission sécurisée de messages de données entre deux utilisateurs (1, 2) de deux équipements de transmission des données respectifs (11, 12) reliés par un réseau de transmission de données (10), procédé dans lequel :
- dans une phase d'initialisation,
- on saisit et mémorise, pour chaque équipement (1, 2), des données d'identification physique (150, 151) représentant une caractéristique physique d'un utilisateur autorisé de celui-ci (1, 2), données que l'on associe à l'équipement considéré (11, 12), et on associe en une paire les données (150, 151) des deux caractéristiques relevées,
- on associe une clé de chiffrement (152) et une clé correspondante de déchiffrement (153) de messages à la paire de données d'identification (150, 151), et,
dans une phase d'exploitation,
pour la transmission d'un message depuis l'un des équipements (1), sous la commande d'un utilisateur présent (1, 3),
en émission :
- on saisit (22) la caractéristique physique de celui-ci (1,3) et on la compare aux données homologues (150) de l'utilisateur autorisé (1) pour, en cas de concordance, chiffrer le message selon la clé associée (152) et l'émettre et
en réception,
- on mémorise le message chiffré et on saisit (122) une caractéristique physique d'un utilisateur récepteur présent,
procédé caractérisé par le fait que, en émission, on émet, associées au message, les données (150) d'identification physique de l'utilisateur émetteur (1), présent et autorisé, et, en réception, on mémorise lesdites données d'identification physique (150) reçues et
on ne délivre (125) le message, sous forme déchiffrée, qu'après :
- accès aux données d'identification (151) formant, avec celles reçues (150), ladite paire et accès à la clé de déchiffrement associée (153),
- déchiffrement du message selon ladite clé (153), et
- contrôle (121) de la concordance de la caractéristique physique saisie (122) de l'utilisateur récepteur présent avec les données d'identification (151) auxquelles on a accédé.

2. Procédé selon la revendication 1, dans lequel, en cas de non concordance entre la caractéristique physique saisie de l'utilisateur présent de l'équipement récepteur (12) avec les données d'identification (151), on délivre directement le message, sans le déchiffrer.

3. Procédé selon la revendication 1, dans lequel, en cas de non concordance entre la caractéristique physique saisie de l'utilisateur présent de l'équipement récepteur (12) avec les données d'identification (151), on déchiffre le message et on en bloque (121) la délivrance.

4. Procédé selon l'une des revendications 1 à 3, dans lequel en cas de non concordance entre la caractéristique physique saisie de l'utilisateur présent de l'équipement récepteur (12) avec les données d'identification (151), on émet en retour un message de tentative d'intrusion.

5. Procédé selon l'une des revendications 1 à 4, dans lequel, en exploitation, la saisie, en émission, de la caractéristique physique (150) déclenche l'émission.

6. Procédé selon l'une des revendications 1 à 5, dans lequel on transmet en clair les données d'identification (42).

7. Procédé selon l'une des revendications 1 à 5, dans lequel, l'équipement récepteur (12) desservant une pluralité d'utilisateurs (2, 4) formant chacun l'un des deux termes d'une pluralité correspondante de paires d'utilisateurs autorisés (1, 2; 3, 4), on crypte les données d'identification (150) à émettre selon une clé de cryptage commune à toutes les paires.

8. Procédé selon l'une des revendications 1 à 5, dans lequel l'équipement récepteur (12) desservant une pluralité d'utilisateurs (2, 4) formant chacun l'un des deux termes d'une pluralité correspondante de paires d'utilisateurs autorisés (1, 2; 3, 4), on crypte les données d'identification à émettre selon une pluralité correspondante de clés publiques de cryptage, associées à une clé unique secrète de décryptage du terminal récepteur (2).

9. Procédé selon l'une des revendications 1 à 8, dans lequel on saisit les empreintes digitales de l'utilisateur pour engendrer les données d'identification physique.
